# EUROPEAN PATENT APPLICATION

(11) **EP 1 125 679 A2**
(43) Date of publication of application: **22.08.2001**
(21) Application number: 01103346.1
(22) Date of filing: 13.02.2001
(51) Int. Cl.: B23Q 11/00

(54) **Apparatus for disposing of cut green body pieces of an insulator preform**

(30) Priority: 14.02.2000 JP 2000034555
(71) Applicant: NGK INSULATORS, LTD., Nagoya City Aichi Pref. (JP)
(72) Inventor: Tanaka, Tadashi, Nagoya City, Aichi Pref. (JP); Ito, Shinichi, Nagoya City, Aichi Pref. (JP)
(74) Representative: Leson, Thomas Johannes Alois, Dipl.-Ing.

(57) **Abstract**

A cut body piece-disposal apparatus for an insulator-shaping apparatus in which an insulator preform is erected on a rotary disc and the preform is worked into a given shape through being cut with a bite, while the insulator preform is being rotated, said cut body piece-disposal apparatus including a cover erected around the insulator-shaping apparatus and adapted for the prevention of scattering of the cut body pieces of the insulator preform and protection from falling of the insulator preform, and a plurality of rotary vanes provided at an outer peripheral face of said rotary disc and adapted to drop, into a discharge pit formed at a floor face, the cut green body pieces which wind near the rotary disc.

## Description

### Background of the Invention

### (1) Field of the Invention

The present invention relates to an apparatus for disposing of cut body pieces of an insulator preform to be used for the production of an insulator.

### (2) Related Art Statement

Hollow insulators, large-size rod-shaped solid insulators, etc. are each formed by erecting an insulator preform extruded from a pug mill on a rotary disc and cutting the insulator preform with a bite to form given shed portions, while the preform is being rotated around its vertical axis as in a case of a wood turner. This cutting is performed separately at plural times. While the cut pieces are scattered almost horizontally in the form of thin strips in a initial cutting stage and a finish cutting state with a smaller amount of the cut pieces, such cut pieces fall obliquely downwardly in the form of thick strips in a roughly cutting stage with a larger amount of the cut pieces.

The cut body pieces are dropped into a discharge pit formed in a floor face, and returned, with a underfloor conveyor, to a raw material-formulating step where they are recycled. For this purpose, an operator for the insulator-shaping apparatus formerly collected cut body pieces scattered around it and dropped the cut pieces into the discharge pit. However, a great load is imposed upon the operator, because a most volume of the insulator preform is cut and the total volume of the cut body is very large.

Thick cut body pieces, which obliquely downwardly fall, wind around the rotary disc as they keep their ribbon-shaped forms and turn with the rotary disc, so that the cut pieces do not easily fall into the discharge pit. Therefore, if such wound cut body pieces are left as they are, they are cut into pieces with a centrifugal force, and scattered in unspecified directions. In addition, it is not easy to dispose of the cut pieces thus scattered after the cutting. Further, since the insulator preform is heavy, there is a fear that if an earthquake occurs during the cutting work, the preform falls from the rotary disc and damages the operator.

### Summary of the Invention

It is an object of the present invention to solve the abovementioned problems of the prior art, and to provide an apparatus for disposing of cut body pieces of an insulator preform, which apparatus can drop the cut pieces produced during cutting the insulator preform into the discharge pit, without imposing a great load upon an operator and which can also contribute to safety of the operator.

The apparatus for disposing of the cut body pieces of the insulator preform according to the present invention, which has been made to solve the above problems, comprises a cover erected around the insulator-shaping apparatus and adapted for the prevention of scattering of the cut body pieces of the insulator preform, said insulator-shaping apparatus being adapted to cut an insulator preform erected on a rotary disc into a given shape with a bite, while the insulator preform is being rotated, and a plurality of rotary vanes provided at an outer peripheral face of said rotary disc and adapted to drop, into a discharge pit formed at a floor face, the cut body pieces which would wind near the rotary disc. Preferably, each of the rotary vanes is provided with a cutter, preferably a horizontally extending cutter. Further, it is preferable that a second discharge pit is formed at the floor face in a direction orthogonal to a straight segment connecting a rotary center of the rotary disc with the bite, and that a second cover for the prevention of scattering of the cut body pieces of the insulator preform and projection from the falling of the insulator preform is erected around the second discharge pit.

According to the apparatus for disposing of the cut body pieces of the insulator preform in the present invention, the cut body pieces, which would fall near the rotary disc and wind around the disc, are cut and pushed toward radially outer directions with a plurality of rotary blades provided at the outer peripheral face of the rotary disc, so that the cut body pieces fall into the discharge pit formed in the floor face owing to their self weights. Therefore, as compared with the conventional operation, the load of the operator can be reduced. Further, if earthquake overturns the insulator preform, the preform is stopped by the cut body piece-scattering preventing and falling protection cover, which diminishes the danger that the insulator preform rides over the operator.

These and other objects, features and advantages of the invention will be appreciated upon reading of the following description of the invention when taken in conjunction with the attached drawings, with the understanding that some modifications, variations or changes could be made by the skilled person in the art to which the invention pertains.

### Brief Description of the Drawings

For a better understanding of the invention, reference is made to the attached drawings wherein:
Fig. 1 is a partially cutaway front view of a part of an apparatus for disposing of the cut body pieces of an insulator preform together with an insulator-shaping apparatus;
Fig. 2 is a schematic plane view of an apparatus for disposing of the cut body pieces of an insulator together with an insulator-shaping apparatus;
Fig. 3 is a schematic plane view of a rotary disc and rotary vanes; and
Fig. 4 is an oblique view of showing the rotary blade.

### Detailed Description of the Invention

In the following, the present invention will be explained in more detail below.

In the insulator-forming apparatus, an insulator preform is placed concentrically on the rotary disc around the rotary axis thereof. The first cover for preventing the scattering of the cut body pieces of the insulator preform is provided, substantially surrounding the insulator-forming apparatus excluding a place leading to the discharge pit, while being spaced from the rotary disc by a given distance. The first cover is erected from the floor along an outer peripheral portion of the rotary disc, and preferably has a circular section, and more preferably is arranged concentrically with the rotary disc. The height of the cover is so set that it may not hinder handling the insulator preform. The cover is preferably almost the same height as that of the rotary disc to minimize the leakage of the cut body pieces, while ensuring excellent handling of the insulator bodies. The first cover may be fixedly provided.

A discharge pit is provided at a floor face at a place near the rotary disc, and the cover is provided with an opening through which the cut body pieces are led into the discharge pit.

A plurality of rotary vanes are provided at an outer peripheral face of the rotary disc. The rotary vanes are to push the cut body pieces into the discharge pit. The shape, the dimensions, the number and the arrangement of the rotary vanes may be freely selected, so long as the rotary vanes may effectively push the cut body pieces into the discharge pit. For example, the rotary vanes may be provided radially projecting from the outer peripheral face of the rotary disc every 90° or 120°. The number of the rotary vanes provided may be increased or decreased, depending upon the size of the rotary disc. For effectively pushing the cut body pieces into the discharge pit, an oblique or vertical plate is preferable as the rotary vane. The length of the rotary vane extending radially outwardly from the rotary disc is set such that the radially outermost end of the rotary vane may pass near the inner peripheral face of the cover.

Further, the rotary vane is preferably provided with a cutter, preferably extending horizontally. The shape of the cutter is not limited, so long as it can easily cut the cut body pieces. The cutter is preferably to increase the strength of the rotary vane. For example, a horizontal cutter is provided in such a way that it is located at a upstream side of the vertically extending rotary vane as viewed in a rotating direction. In this case, the horizontal cutter may be preferably narrowed in a radially outer direction, which can more easily discharge the cut body pieces through the discharge pit. Such a horizontal cutter may be provided at a downstream side of the vertically extending rotary vane as viewed in the rotating direction so that the strength of the rotary vane may be further increased.

A second discharge pit is provided at the floor face at a location spaced from the rotary disc, for example, by 1 to 2 m, in a direction orthogonal to a straight segment between the rotary axis O of the rotary disc and the bite, because the body pieces cut with the bite also scatter in this direction.

In order to drop the cut body pieces scattering in this direction into the second discharge pit, a second higher cover for the prevention of scattering of the cut body pieces of the insulator preform and protection against falling of the insulator preform is provided outside the first cover. Preferably, opposite end portions of the second cover are integrated with corresponding portions of the first cover, and the second cover is positioned at a level higher than that of the first cover.

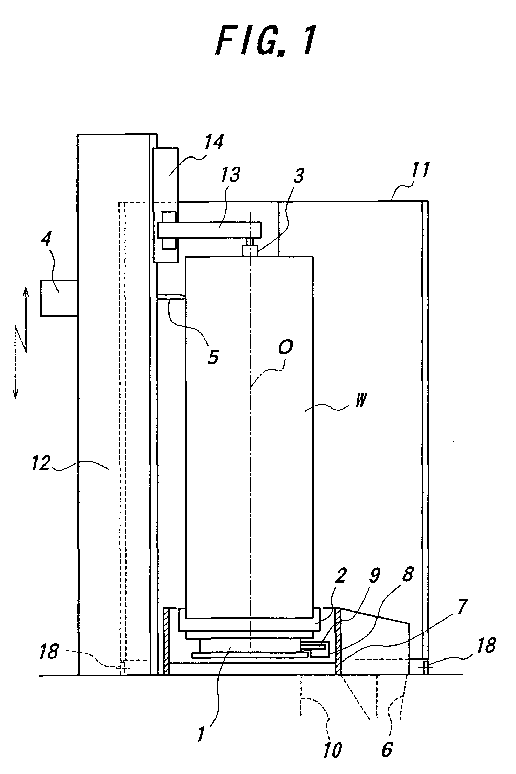

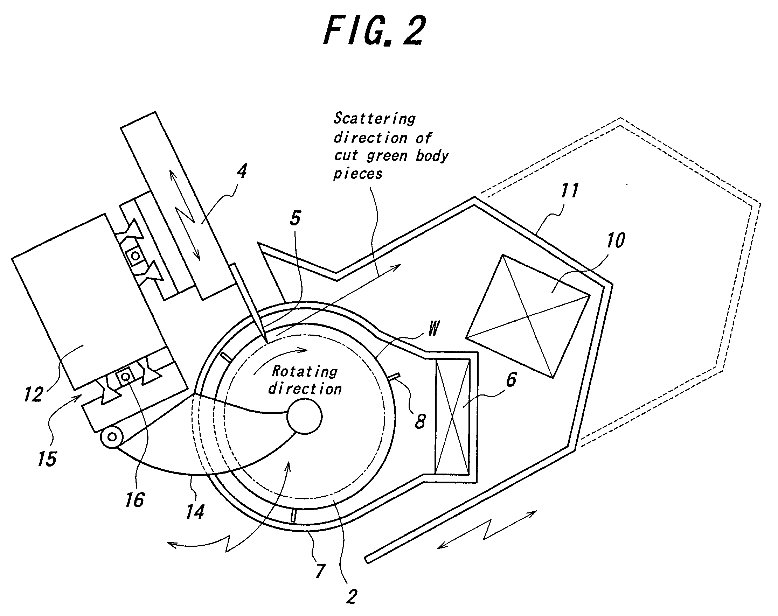

Fig. 1 is a partially cutaway front view showing an insulator-molding apparatus together with an apparatus for disposing of cut body pieces of an insulator preform, a front portion of a first cover 7 being cut away. Fig. 2 is a schematic plane view of Fig. 1, and Fig. 1 is a figure of the apparatuses as viewed at about 30° from a lower left side of Fig. 2. In these figures, 1 is a rotary disc, and is rotated in an arrow direction by a motor (not shown) arranged under a floor. W denotes an insulator preform erected on the rotary disc 1 via a lower chuck 2 placed on the rotary disc 1. The upper end of the insulator preform is supported with a freely rotatable upper chuck 3 so that the preform may be rotated around a vertical rotary axis O together with the rotary disc 1. The upper chuck 3 is supported by a support pole 12 via an arm 13 such that the upper chuck 3 is vertically moved by a vertically movable mechanism including guides 15 and a ball screw 16. When the insulator preform is to be placed on the rotary disc, the upper chuck is pivotably moved away, the insulator preform is placed on the rotary disc, and the upper chuck is pivotably returned to a central portion and descended to chuck the upper end of the insulator preform W. When the cut insulating preform is to be removed from the rotary disc, the upper chuck is moved up and away from the central portion.

An apparatus for cutting the insulator preform W into a given shape is denoted by 4, and the outer peripheral face of the insulator preform W is gradually cut into a shed-provided shape on rotating by moving to-and-fro a bite 5 with respect to the rotary axis O as in a copying grinding, while vertically moving the bite. The cutting apparatus is also supported by the support pole 12 via a moving mechanism. Such a cutting apparatus itself is conventionally known, and its explanation is omitted because it is not a principal portion of the present invention. This cutting includes rough cutting and finish cutting effected separately at plural times. If the amount of the cut body pieces is small, the cut body pieces take thin ribbon-shaped strips and continuously scatter in an arrow direction of Fig. 2. If the amount of the cut body pieces is large, the cut body pieces take thick ribbon-shaped strips, and fall around the rotary disc 1.

A first discharge pit 6 is formed at a floor surface near the rotary disc 1. A first cover 7 for the prevention of scattering of cut body pieces of the insulator preform and protection against falling of the insulator preform is erected, in a circular shape as viewed in section, from the floor surface. The height of the first cover portion 7 is almost the same level of the rotary disc 1, and the first protective cover is provided with an opening only at a place corresponding to the first discharge pit 6 for guiding the cut body pieces into the first discharge pit 6.

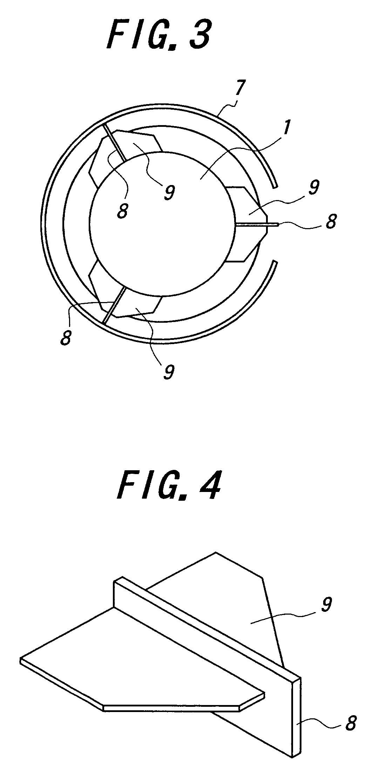

A plurality of rotary vanes 8 are provided at an outer peripheral face of the rotary disc 1 as shown in Figs. 1, 3 and 4. In this embodiment, the rotary vanes 8 are vertically planar blades spaced circumferentially equally at an angular arrangement of 120° and projecting radially outwardly. A horizontal cutter 9 is provided extending from a central portion of the rotary vane 8, and end portions of the cutter 9 are inclined as shown in Fig. 4 so that the cut body pieces can be easily cut.

The remote end of the rotary vane 8 extends near the inner peripheral face of the first cover portion 7. Thus, the rotary vanes 8 cut the cut body pieces falling between the rotary disc 1 and the first cover 7, and turn them, following the rotation of the rotary disc 1. The cut body pieces are centrifugally led to the first discharge pit 6, and dropped through it. The provision of the horizontal cutters 9 can more finely cut the ribbon-shaped continuous cut body pieces, although such is performed to some extent by the rotary vanes 8 without cutters 9.

Further, as shown in Fig. 2, a second discharge pit 10 is provided at the floor surface, spaced from the rotary disc 1 by 1 to 2 m. This second discharge pit 10 is arranged at the floor in an orthogonal direction to a straight segment connecting the rotary axis O of the rotary disc 1 and the bite 5. The reason is that the body pieces cut with the bite 5 fly in a direction shown in Fig. 2 over the upper end of the first cover 7.

A second higher cover 11 for the prevention of scattering of the cut piece of the insulator preform and protection against falling of the preform is erected outside the first cover 7 so that the cut body pieces scattered as in Fig. 2 may assuredly fall in the second discharge pit 10. This cover 11 is provided extending upwardly from the first cover 7. The cover 11 is provided with rollers 18 at a bottom face so that the cover may be moved between the working position denoted by the solid lines 1 and a retracted position denoted by dotted lines in Fig. 2. The cover 11 may be integrated with the cover 7 at a portion right and down from the rotary disc 1 in Fig. 2.

Since the disposal apparatus according to the present invention is constituted as mentioned above, the thin ribbon-shaped cut body pieces formed in the cutting initial and finish stages are scattered horizontally as in an arrow direction of Fig. 2 and collide with the second cover 11. Then, most of the cut body pieces can be dropped through the discharge pit 10 due to their self weight.

Thick ribbon-shaped cut body pieces formed in the cutting middle stage drop around the rotary disc 1. Immediately thereafter, they are finely cut with the rotary vanes 8 and the horizontal cutters 9, and led to and dropped through the first discharge pit 6 via the opening of the first cover. Therefore, when the disposal apparatus according to the present invention is used, almost all the cut body pieces can be spontaneously dropped through the discharge pits 6, 10, and a labor for an operator to drop the cut body pieces as in the conventional technique can be reduced.

Preferably, the second higher cover 11 is opened or closed via a hinge so that the cover 11 may be easily opened for setting the insulator preform W onto the rotary disc 1 or removing the cut insulator preform W from the rotary disc 1.

As having been explained above, according to the apparatus for disposing of the cut body pieces of the insulator preform W in the present invention, the continuous ribbon-shaped body pieces produced during cutting the preform can be smoothly dropped through the discharge pit(s) without incurring a large burden upon the operator. The cut body pieces are recovered through the discharge pit(s), and returned to the raw body-formulating step as in the conventional technique, so that the cut body pieces are recycled as the material for the insulator preform. Therefore, wasteful use of the raw body can be diminished. Further, even if the insulator preform falls at the time of an earthquake, the preform can be supported by the cover(s) for the prevention of the scattering of the cut body pieces and the falling protection, so that the safety of the operator can be ensured.

A cut body piece-disposal apparatus for an insulator-shaping apparatus in which an insulator preform is erected on a rotary disc and the preform is worked into a given shape through being cut with a bite, while the insulator preform is being rotated, said cut body piece-disposal apparatus including a cover erected around the insulator-shaping apparatus and adapted for the prevention of scattering of the cut body pieces of the insulator preform and protection from falling of the insulator preform, and a plurality of rotary vanes provided at an outer peripheral face of said rotary disc and adapted to drop, into a discharge pit formed at a floor face, the cut green body pieces which wind near the rotary disc.

## Claims

1. A cut body piece-disposal apparatus for an insulator-shaping apparatus in which an insulator preform is erected on a rotary disc and the preform is worked into a given shape through being cut with a bite, while the insulator preform is being rotated, said cut body piece-disposal apparatus including a cover erected around the insulator-shaping apparatus and adapted for the prevention of scattering of the cut body pieces of the insulator preform, and a plurality of rotary vanes provided at an outer peripheral face of said rotary disc and adapted to drop, into a discharge pit formed at a floor face, the cut body pieces which wind.

2. The cut body piece-disposal apparatus set forth in claim 1, wherein each of the rotary vanes is provided with a horizontal cutter.

3. The cut body piece-disposal apparatus set forth in claim 1 or 2, wherein a second discharge pit is formed at the floor face in a direction orthogonal to a straight segment connecting a rotary center of the rotary disc with the bite, and a second cover for the prevention of scattering of the cut body pieces of the insulator preform and projection from the falling of the insulator preform is erected around the second discharge pit.
